# FASCICULE DE BREVET EUROPEEN

(11) **EP 3 216 175 B1**
(45) Date de publication et mention de la délivrance du brevet: **09.01.2019**
(21) Numéro de dépôt: 15804879.3
(22) Date de dépôt: 03.11.2015
(51) Int. Cl.: H04L 12/721, H04L 12/46, H04L 12/26

(54) **PROCÉDÉ DE SURVEILLANCE ET DE CONTRÔLE DÉPORTÉS D'UN CLUSTER UTILISANT UN RÉSEAU DE COMMUNICATION DE TYPE INFINIBAND ET PROGRAMME D'ORDINATEUR METTANT EN OEUVRE CE PROCÉDÉ**
VERFAHREN ZUR ENTFERNTEN ÜBERWACHUNG UND STEUERUNG EINES CLUSTERS ÜBER EIN KOMMUNIKATIONSNETZWERK VOM INFINIBAND-TYP UND COMPUTERPROGRAMM ZUR DURCHFÜHRUNG DIESES VERFAHRENS
METHOD OF DISTANT MONITORING AND CONTROL OF A CLUSTER USING A COMMUNICATION NETWORK OF INFINIBAND TYPE AND COMPUTER PROGRAMME IMPLEMENTING THIS METHOD

(30) Priorité: 06.11.2014 FR 1460723
(43) Date de publication de la demande: 13.09.2017
(73) Titulaire: Bull SAS, 78340 Les Clayes-sous-Bois (FR)
(72) Inventeur: FICET, Jean-Vincent, 73110 La Chapelle Blanche (FR); DUGUE, Sébastien, 38119 Saint Theoffrey (FR); GERPHAGNON, Jean-Olivier, 38450 Vif (FR)
(74) Mandataire: Santarelli
(86) Numéro de dépôt international: PCT/FR2015/052970
(87) Numéro de publication internationale: WO 2016/071628

(56) Documents cités:
- WO-A1-2009/029774
- US-A1- 2013 315 243

## Description

La présente invention concerne la surveillance et le contrôle des clusters, en particulier de clusters utilisant un réseau de communication de type InfiniBand, et plus particulièrement un procédé de surveillance et de contrôle déportés d'un cluster utilisant un réseau de communication de type InfiniBand et un programme d'ordinateur mettant en oeuvre un tel procédé.

Le calcul haute performance, aussi appelé HPC (sigle de *High Performance Computing* en terminologie anglo-saxonne) se développe pour la recherche universitaire comme pour l'industrie, notamment dans des domaines techniques tels que l'aéronautique, l'énergie, la climatologie et les sciences de la vie. La modélisation et la simulation permettent en particulier de réduire les coûts de développement, d'accélérer la mise sur le marché de produits innovants, plus fiables et moins consommateurs d'énergie. Pour les chercheurs, le calcul haute performance est devenu un moyen d'investigation indispensable.

Ces calculs sont généralement mis en oeuvre sur des systèmes de traitement de données appelés clusters. Un cluster comprend typiquement un ensemble de noeuds interconnectés. Certains noeuds sont utilisés pour effectuer des tâches de calcul (noeuds de calcul), d'autres pour stocker des données (noeuds de stockage) et en général un autre gère le cluster (noeud d'administration). Chaque noeud est par exemple un serveur mettant en oeuvre un système d'exploitation tel que Linux (Linux est une marque). La connexion entre les noeuds est, par exemple, réalisée à l'aide de liens de communication Ethernet ou InfiniBand (Ethernet et InfiniBand sont des marques).

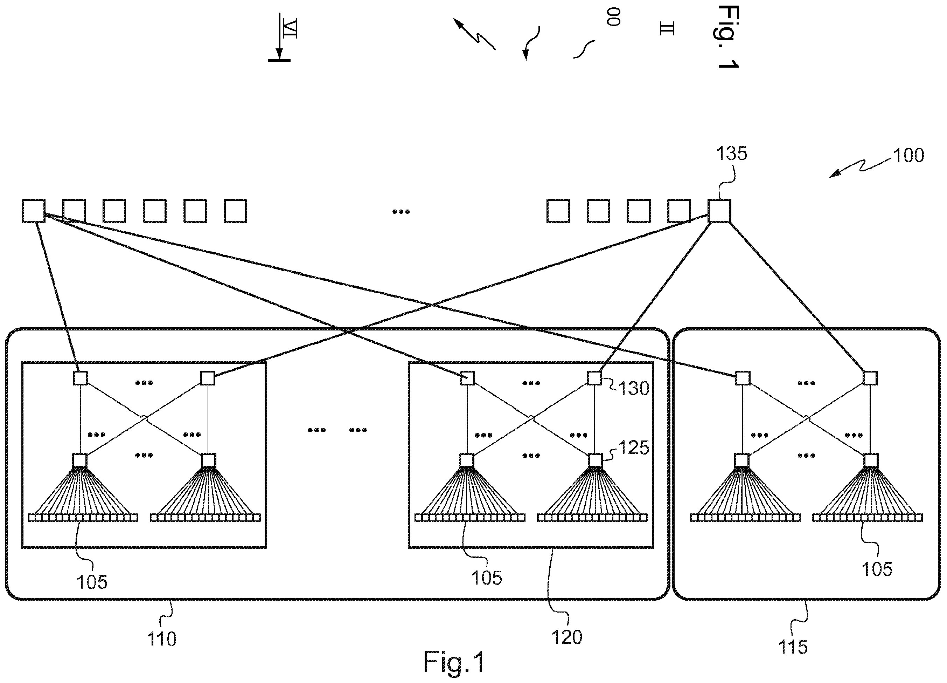

La figure 1 illustre schématiquement un exemple d'une topologie 100 d'un cluster, de type *fat-tree.* Ce dernier comprend un ensemble de noeuds génériquement référencés 105. Les noeuds appartenant à l'ensemble 110 sont ici des noeuds de calcul tandis que les noeuds de l'ensemble 115 sont des noeuds de service (noeuds de stockage et noeud d'administration). Les noeuds de calcul peuvent être regroupés en sous-ensembles 120 appelés îlots de calcul, l'ensemble 115 étant appelé îlot de service.

Les noeuds sont reliés les uns aux autres par des commutateurs (appelés *switch* en terminologie anglo-saxonne), par exemple de façon hiérarchique. Dans l'exemple illustré sur la figure 1, les noeuds sont connectés à des commutateurs 125 de premier niveau qui sont eux-mêmes reliés à des commutateurs 130 de deuxième niveau qui sont à leur tour reliés à des commutateurs 135 de troisième niveau.

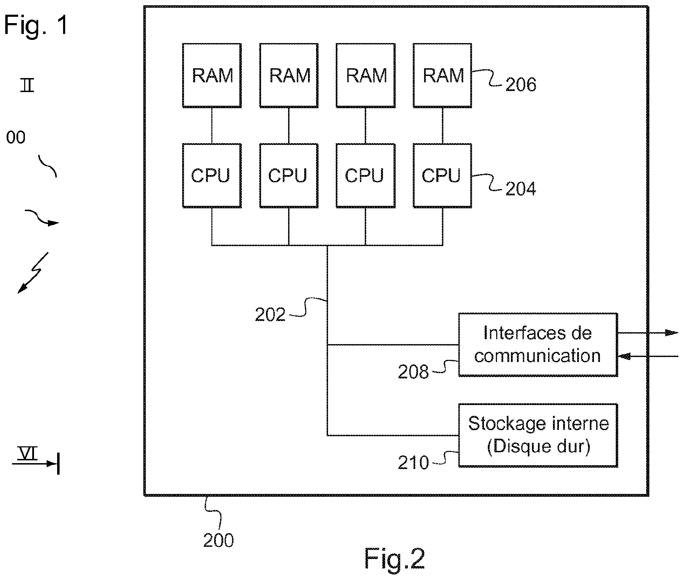

Comme illustré sur la figure 2, chaque noeud comprend généralement un ou plusieurs microprocesseurs, des mémoires locales ainsi qu'une interface de communication. Plus précisément, le noeud 200 comporte ici un bus de communication 202 auquel sont reliés :
- des unités centrales de traitement ou microprocesseurs 204 (ou CPU, sigle de *Central Processing Unit* en terminologie anglo-saxonne) ;
- des composants de mémoire vive 206 (RAM, acronyme de *Random Access Memory* en terminologie anglo-saxonne) comportant des registres adaptés à enregistrer des variables et paramètres créés et modifiés au cours de l'exécution de programmes (comme illustré, chaque composant de mémoire vive peut être associé à un microprocesseur) ; et,
- des interfaces de communication 208 adaptées à transmettre et à recevoir des données.

Le noeud 200 dispose en outre ici de moyens de stockage interne 212, tels que des disques durs, pouvant notamment comporter le code exécutable de programmes.

Le bus de communication permet la communication et l'interopérabilité entre les différents éléments inclus dans le noeud 200 ou reliés à lui. Les microprocesseurs 204 commandent et dirigent l'exécution des instructions ou portions de code logiciel du ou des programmes. Lors de la mise sous tension, le ou les programmes qui sont stockés dans une mémoire non volatile, par exemple un disque dur, sont transférés dans la mémoire vive 206.

Il est observé ici que les performances d'un cluster sont directement liées au choix des routes permettant le transfert de données entre les noeuds, établies via des liens de communication. De façon générale, des liens de communication physiques sont établis entre les noeuds et les commutateurs lors de la configuration matérielle d'un cluster, les routes de communication étant elles-mêmes déterminées dans une phase d'initialisation à partir d'une définition des connexions devant êtres établies entre les noeuds. Selon la technologie de communication mise en oeuvre, la configuration des routes peut être statique ou dynamique.

A titre d'illustration, la technologie InfiniBand permet, dans un cluster, une configuration statique des routes. Cette configuration utilise des tables statiques de routage (ou LFT, sigle de *Linear Forwarding Table* en terminologie anglo-saxonne) dans chaque commutateur. Lorsque cette technologie est mise en oeuvre, un algorithme de routage tel que les algorithmes connus sous les noms de FTree, MINHOP, UPDN et LASH peut être utilisé.

Le choix de l'algorithme devant être utilisé est typiquement effectué par un administrateur selon, notamment, la topologie du cluster. Il peut s'agir, par exemple, de l'algorithme FTree. Cependant, si l'algorithme choisi ne permet pas d'effectuer le routage, le gestionnaire du cluster (typiquement en charge du routage) choisi en général automatiquement un autre algorithme, par exemple l'algorithme MINHOP (généralement moins performant que celui choisi initialement).

A titre d'illustration et de façon simplifiée, l'algorithme FTree détermine des routes de telle sorte que celles-ci soient réparties autant que possible à travers les liens de communication existants. A ces fins, lors du routage d'un réseau de communication entièrement connecté selon une architecture de type *fat-tree,* chaque noeud du réseau est considéré comme ayant une même importance. Ainsi, lorsqu'une route est établie entre deux noeuds d'un même lien, le nombre de routes utilisant ce lien, appelé la charge du lien, est augmenté de un. Lorsque l'algorithme de routage cherche à établir une nouvelle route et que plusieurs possibilités se présentent, il compare les niveaux de charge associés aux liens sur lesquels sont basées ces possibilités et choisit celle dont les liens ont le niveau de charge le plus faible.

Au cours de l'utilisation du cluster, si un lien ou un élément tel qu'un noeud ou un commutateur subit une défaillance, un nouveau routage est effectué.

La qualité de routage ayant une influence directe sur les performances d'un cluster, il existe un besoin pour surveiller une configuration de routage dans un cluster comprenant des liens de communication statiques et pour, le cas échéant, alerter un administrateur d'un problème potentiel de routage.

Comme observé précédemment, la surveillance et le contrôle d'un cluster, en particulier des commutateurs, sont typiquement réalisés de façon centralisée par un noeud dédié, appelé noeud d'administration. En outre, ce noeud d'administration exécute des services, par exemple des services de gestion de bases de données et des services de gestion de dispositifs spécifiques (e.g. dispositifs n'étant pas de type InfiniBand dans un cluster InfiniBand).

La surveillance et le contrôle d'un cluster de type InfiniBand sont réalisés à l'aide de paquets de données particuliers, appelés MAD (acronyme de *MAnagement Datagrams* en terminologie anglo-saxonne). Ainsi, un dispositif de surveillance et de contrôle adresse des paquets de type MAD à des équipements de type InfiniBand d'un cluster, typiquement des commutateurs ou des adaptateurs, qui, en réponse, retournent des paquets de réponse de type MAD au dispositif émetteur de surveillance et de contrôle.

Un exemple de de l'état de la technique antérieur se trouve dans US2013/315243.

Cependant, il a été observé qu'il peut être utile, notamment durant une phase de configuration d'un cluster ou lorsque des problèmes se produisent, d'offrir, en plus du noeud d'administration, des moyens de surveillance et/ou de contrôle d'un cluster à distance ou déportés.

L'invention permet de résoudre au moins un des problèmes exposés précédemment.

L'invention a ainsi pour objet un procédé de surveillance et de contrôle déportés d'un cluster comprenant une pluralité de noeuds connectés à un réseau de communication d'un premier type, un noeud de ladite pluralité de noeuds, appelé noeud relai, comprenant une première interface réseau conforme audit premier type de réseau de communication et une seconde interface réseau conforme à un second type de réseau de communication, lesdits premier et second types étant distincts, certaines étapes dudit procédé de surveillance et de contrôle étant mises en oeuvre dans un ordinateur distant relié audit noeud relai par un réseau de communication dudit second type, le procédé comprenant les étapes suivantes :
- réception d'au moins un paquet de données via ladite première interface réseau ;
- encapsulation dudit au moins un paquet de données reçu dans au moins une trame de données conforme à un protocole dudit réseau de communication dudit second type ;
- transmission de ladite au moins une trame de données audit ordinateur distant via ladite seconde interface réseau,
lesdites étapes de réception d'au moins un paquet de données, d'encapsulation dudit au moins un paquet de données et de transmission de ladite au moins une trame de données étant mises en oeuvre dans ledit noeud relai.

Le procédé selon l'invention permet ainsi d'agir à distance. Il offre en outre la possibilité d'effectuer une analyse fine d'événements dans un cluster. Ainsi, par exemple, un simple ordinateur portable relié à un cluster de type InfiniBand via un lien Ethernet permet de surveiller et gérer au moins certains paramètres d'un cluster.

Selon un mode de réalisation particulier, le procédé comprend en outre les étapes suivantes, mises en oeuvre dans ledit noeud relai,
- réception, via ladite seconde interface réseau, dudit ordinateur distant, d'au moins une trame de données comprenant au moins un paquet de données ;
- décapsulation de ladite au moins une trame de données reçue pour recouvrer ledit au moins un paquet de données contenu dans ladite au moins une trame de données reçue ; et
- transmission, via ladite première interface réseau, dudit au moins un paquet de données recouvré.

Selon un mode de réalisation particulier, le procédé comprend en outre les étapes suivantes, mises en oeuvre dans ledit ordinateur distant,
- réception, dudit noeud relai, d'au moins une trame de données comprenant au moins un paquet de données ;
- décapsulation de ladite au moins une trame de données reçue dudit noeud relai pour recouvrer ledit au moins un paquet de données contenu dans ladite trame de données reçue dudit noeud relai ; et
- traitement dudit au moins un paquet de données recouvré contenu dans ladite trame de données reçue dudit noeud relai, lesdites étapes de réception de ladite au moins une trame de données, ladite étape de traitement dudit au moins un paquet de données recouvré étant mise en oeuvre dans un module de surveillance et de contrôle configuré pour être mis en oeuvre dans un noeud dudit cluster.

Selon un mode de réalisation particulier, le procédé comprend en outre les étapes suivantes, mises en oeuvre dans ledit ordinateur distant,
- réception, d'un module de surveillance et de contrôle configuré pour être mis en oeuvre dans un noeud dudit cluster, d'au moins un paquet de données ;
- encapsulation dudit au moins un paquet de données reçu dudit module de surveillance et de contrôle configuré pour être mis en oeuvre dans un noeud dudit cluster, dans au moins une trame de données conforme à un protocole dudit réseau de communication dudit second type ;
- transmission, audit noeud relai, de ladite au moins une trame de données comprenant ledit au moins un paquet de données reçu dudit module de surveillance et de contrôle configuré pour être mis en oeuvre dans un noeud dudit cluster.

Selon un mode de réalisation particulier, le procédé comprend en outre une étape préalable de mémorisation, dans ledit noeud relai, d'une adresse dudit ordinateur distant, ladite adresse dudit ordinateur distant mémorisée étant utilisée pour encapsuler au moins un paquet de données à transmettre audit ordinateur distant sous forme d'au moins une trame de données.

Selon un mode de réalisation particulier, le procédé comprend en outre une étape de mémorisation, dans ledit ordinateur distant, d'une adresse dudit noeud relai, ladite adresse dudit noeud relai mémorisée étant utilisée pour encapsuler au moins un paquet de données à transmettre audit noeud relai sous forme d'au moins une trame de données.

Selon un mode de réalisation particulier, au moins un paquet de données transmis dudit noeud relai audit ordinateur distant est un paquet de données de type particulier comprenant des informations relatives audit cluster.

Selon un mode de réalisation particulier, ledit premier type de réseau de communication est le type InfiniBand et selon lequel ledit second type de réseau de communication est le type Ethernet.

L'invention a également pour objet un programme d'ordinateur comprenant des instructions adaptées à la mise en oeuvre de chacune des étapes du procédé décrit précédemment lorsque ledit programme est exécuté sur un ordinateur ainsi qu'un système comprenant au moins un noeud relai et au moins un ordinateur distant comprenant des moyens configurés pour mettre en oeuvre chacune des étapes du procédé décrit précédemment.

Les avantages procurés par ce programme d'ordinateur et ce système sont similaires à ceux évoqués précédemment.

D'autres avantages, buts et caractéristiques de la présente invention ressortent de la description détaillée qui suit, faite à titre d'exemple non limitatif, au regard des dessins annexés dans lesquels :
- la figure 1 illustre un exemple de topologie d'un cluster ;
- la figure 2 illustre un exemple d'architecture d'un noeud d'un cluster ;
- la figure 3 illustre un exemple de mise en oeuvre de l'invention selon un mode de réalisation particulier ;
- la figure 4, comprenant les figures 4a et 4b, illustre schématiquement des étapes mises en oeuvre dans un noeud d'un cluster également relié à un réseau de communication d'un type distinct de celui du cluster, pour transmettre des données de surveillance à un dispositif distant (figure 4a) et recevoir des données de contrôle de ce dispositif distant (figure 4b) ; et
- la figure 5, comprenant les figures 5a et 5b, illustre schématiquement des étapes mises en oeuvre dans un ordinateur distant, relié à un noeud relai d'un cluster, pour recevoir des données de surveillance de ce noeud relai et les traiter (figure 5a) ainsi que pour générer et transmettre des données de contrôle à ce noeud relai (figure 5b).

De façon générale, l'invention vise, selon un mode de réalisation particulier, à établir une passerelle entre le réseau de communication d'un cluster, par exemple un réseau de communication de type InfiniBand, et un réseau de communication de type grand-public, par exemple Ethernet.

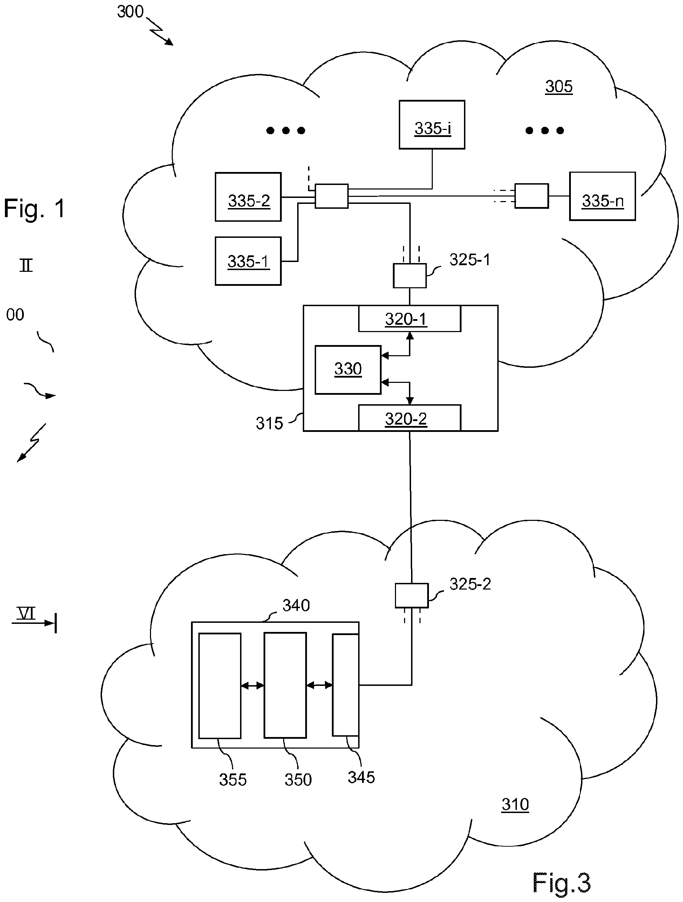

La figure 3 illustre un exemple de mise en oeuvre de l'invention selon un mode de réalisation particulier.

L'environnement 300 dans lequel est mise en oeuvre comprend ici un premier ensemble 305 de dispositifs connectés à un même réseau de communication d'un premier type, par exemple de type InfiniBand et un second ensemble 310 de dispositifs connectés à un réseau de communication d'un second type, distinct du premier, par exemple de type Ethernet.

Comme illustré, le dispositif 315 est relié au réseau de communication de premier type et au réseau de communication de second type (e.g. InfiniBand et Ethernet) via ses interfaces réseaux 320-1 et 320-2 et via les commutateurs 325-1 et 325-2, respectivement.

Ce dispositif permet d'établir une passerelle entre les deux réseaux de communication. A ces fins, il comprend un module relai 330, typiquement un module logiciel.

Le dispositif 315 peut ainsi échanger des données avec des dispositifs 335-1 à 335-n en utilisant le réseau de communication de premier type (e.g. InfiniBand) et avec un dispositif 340 en utilisant le réseau de communication de second type (e.g. Ethernet).

Le dispositif 315, appelé noeud relai dans la suite de la description, est typiquement un noeud d'administration.

Un module relai 330, mis en oeuvre dans ce serveur, permet de transmettre des données reçues par le noeud relai 315 par l'une des interfaces réseaux sur l'autre interface réseau et réciproquement.

Le module relai 330 permet ainsi de transmettre des données, sous forme de paquets (e.g. paquets de type MAD), d'un dispositif relié au réseau de communication de premier type (e.g. InfiniBand), au dispositif 340 dont un identifiant, par exemple une adresse IP, a été préalablement obtenu ou est dynamiquement obtenu. Les paquets de données reçus sont, selon un mode de réalisation particulier, transmis sous forme de trames suite à une étape d'encapsulation.

Réciproquement, le module relai 330 permet de transmettre des données reçues par le noeud relai 315, sous forme de trames, du dispositif 340, vers un dispositif relié au réseau de communication de premier type (e.g. InfiniBand). Un identifiant du ou des dispositifs auxquels doivent être transmises, sous forme de paquets (e.g. paquets de type MAD), des données reçues est, de préférence, transmis dans les trames reçues (typiquement dans des paquets de données transmis dans les trames).

Selon un mode de réalisation particulier, les trames reçues sont décapsulées pour recouvrer des paquets préalablement encapsulés à transmettre sur le réseau de communication de premier type, ces paquets de données comprenant des identifiants du ou des destinataires.

Le dispositif de surveillance et de contrôle 340 est typiquement un ordinateur personnel, par exemple de type PC (sigle de *Personal Computer* en terminologie anglo-saxonne) portable. Il comprend une interface réseau 345, un module relai 350 et un module de surveillance et de contrôle 355. Ces deux modules sont typiquement des modules logiciels.

Le module de surveillance et de contrôle 355 est ici un module de surveillance et de contrôle standard, généralement utilisé dans un noeud d'administration pour surveiller et contrôler la bonne exécution de certaines opérations effectuées dans un cluster.

Il est ainsi typiquement conçu pour traiter directement des paquets de données reçus du réseau de communication du cluster, c'est-à-dire ici du réseau de communication de type InfiniBand, en particulier des paquets de type MAD.

Le module relai 350 mis en oeuvre dans le dispositif de surveillance et de contrôle 340 permet de transmettre des données reçues du noeud relai 315, par exemple sous forme de trames, au module de surveillance et de contrôle 355. A ces fins, les trames reçues sont, selon un mode de réalisation particulier, décapsulées pour adresser les données contenues dans ces trames sous forme de paquets (e.g. paquets de type MAD) au module de surveillance et de contrôle 355.

Réciproquement, le module relai 350 permet de transmettre des données reçues du module de surveillance et de contrôle 355, par exemple sous forme de paquets (e.g. paquets de type MAD), au noeud relai 315, par exemple sous forme de trames.

Selon un mode de réalisation particulier, un identifiant du noeud relai 315 auquel doivent être transmises les données reçues, par exemple une adresse IP, est préalablement obtenu ou est dynamiquement obtenu. Toujours selon un mode de réalisation particulier, les paquets reçus sont encapsulées pour qu'elles soient transmises sous forme de trames.

Le module relai 350 permet ainsi de « leurrer » le module de surveillance et de contrôle 355 qui agit comme s'il était mis en oeuvre dans un dispositif directement relié au réseau de communication du cluster, par exemple un réseau de communication de type InfiniBand. Ce module peut être mis en oeuvre sous la forme d'une librairie particulière ou à l'aide d'une fonction de surchargement (appelée *overloading* en terminologie anglo-saxonne) en utilisant la variable d'environnement connue sous le nom de LD_PRELOAD dans l'environnement Unix (Unix est une marque).

Toujours selon un mode de réalisation particulier, le module relai 330 est un démon, c'est-à-dire un processus qui s'exécute en arrière-plan, exécuté par un noeud ayant au moins deux interfaces réseaux, pour recevoir des données sur une interface réseau et les transmettre sur une autre interface réseau.

Il permet ainsi de recevoir des paquets de données de contrôle de cluster (e.g. paquets de type MAD) d'un réseau de communication de type InfiniBand, de les encapsuler dans des trames et de les transmettre sur un réseau de communication de type Ethernet. Réciproquement, il permet de recevoir des trames de données d'un réseau de communication de type Ethernet, de les décapsuler et de les transmettre sous forme de paquets (e.g. paquets de type MAD) sur un réseau de communication de type InfiniBand.

Les paquets de données reçus du réseau de communication de type InfiniBand peuvent être reçus d'un dispositif du cluster en réponse à une requête préalable, par exemple une requête issue du dispositif de surveillance et de contrôle, ou de façon autonome.

De même, les paquets de données émis par le module de surveillance et de contrôle à destination d'un ou plusieurs dispositifs du cluster peuvent être émis en réponse à des données préalablement reçues d'un ou de plusieurs dispositifs du cluster ou de façon autonome.

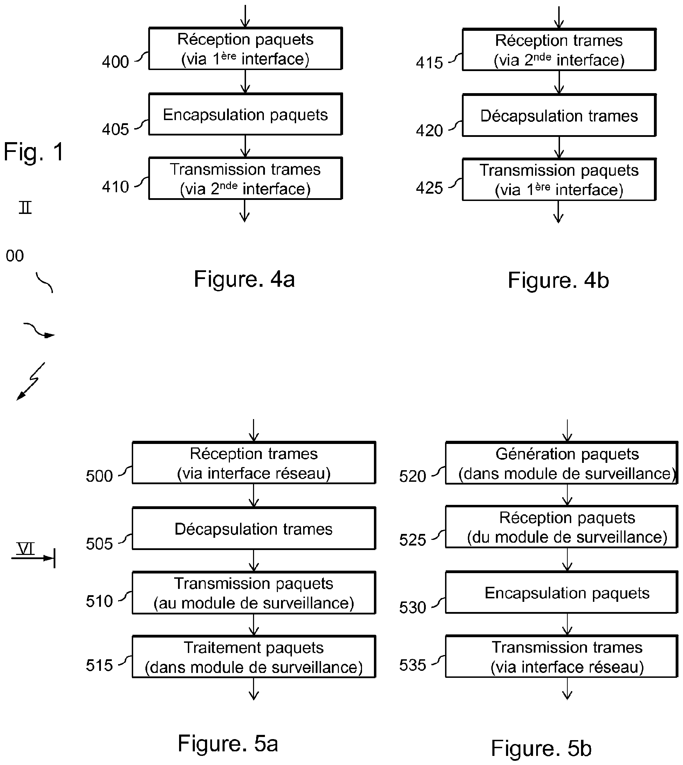

La figure 4, comprenant les figures 4a et 4b, illustre schématiquement des étapes mises en oeuvre dans un noeud d'un cluster également relié à un réseau de communication d'un type distinct de celui du cluster, pour transmettre des données de surveillance à un dispositif distant (étapes 400 à 410 de la figure 4a) et recevoir des données de contrôle de ce dispositif distant (étapes 415 à 425 de la figure 4b). Le noeud mettant en oeuvre les étapes 400 à 425 est, par exemple, le noeud relai 315 décrit en référence à la figure 3.

Les étapes 400 à 410 et les étapes 415 à 425 sont exécutées de façon distincte, typiquement en parallèle.

Comme illustré, pour transmettre des données de contrôle d'un cluster entre un dispositif de ce cluster et un dispositif distant (i.e. non directement relié au cluster), une première étape a pour objet la réception des données (étape 400).

Selon un mode de réalisation particulier, les données échangées entre des dispositifs du cluster sont transmises sous forme de paquets comprenant un identifiant de destinataire. Cet identifiant peut être lié à un seul dispositif (transmission dite *unicast*) ou à plusieurs dispositifs (transmission dite *multicast*)*.* Un identifiant de dispositif peut être, par exemple, une adresse locale, par exemple une adresse connue sous le nom de LID.

Selon ce mode de réalisation, les données reçues au cours de l'étape 400 sont des paquets comprenant, comme destinataire, l'identifiant du noeud relai mettant en oeuvre les étapes 400 à 410. Ces paquets sont reçus par une première interface réseau du noeud relai, par exemple une interface de type InfiniBand.

Dans une étape suivante (étape 405), les données reçues sont encapsulées dans une ou plusieurs trames de données dont le format est défini par le protocole mis en oeuvre dans le réseau de communication reliant le noeud relai mettant en oeuvre les étapes 400 à 410 et le dispositif auquel les données doivent être transmises (i.e. le dispositif utilisé pour surveiller et contrôler le cluster).

Ces trames comprennent un identifiant du dispositif auquel doivent être transmises les données, par exemple l'adresse IP (sigle d'*Internet Protocol* en terminologie anglo-saxonne) de l'interface réseau utilisée de ce dispositif. Selon un mode de réalisation particulier, cet identifiant est préalablement mémorisé dans le noeud relai.

Après avoir été encapsulées, les données à transmettre sont transmises (étape 410) via une seconde interface réseau du noeud relai mettant en oeuvre les étapes 400 à 410, offrant un accès au réseau de communication reliant ce noeud au dispositif auquel les données doivent être transmises, par exemple un réseau de communication de type Ethernet.

Parallèlement, pour transmettre des données de contrôle d'un cluster entre un dispositif distant (i.e. non directement relié au cluster) et un dispositif de ce cluster, une première étape a pour objet la réception des données de contrôle (étape 415).

Selon un mode de réalisation particulier, les données échangées entre ce dispositif distant et le noeud du cluster mettant en oeuvre les étapes 415 à 425 (i.e. noeud relai) sont transmises sous forme de trames encapsulant les données à échanger, ces dernières pouvant elles-mêmes être organisées sous forme de paquets de données, ces trames comprenant un identifiant du noeud relai. Cet identifiant peut être, par exemple, l'adresse IP de la seconde interface réseau du noeud relai.

Dans une étape suivante (étape 420), les données reçues sous forme de trames sont décapsulées pour recouvrer les données dans un format compatible avec le réseau de communication du cluster, typiquement des paquets de données comprenant un identifiant d'un ou plusieurs dispositifs dans le cluster.

Après avoir été décapsulées, les données à transmettre sont transmises (étape 425) via la première interface réseau du noeud relai, offrant un accès au réseau de communication du cluster.

La figure 5, comprenant les figures 5a et 5b, illustre schématiquement des étapes mises en oeuvre dans un ordinateur distant, relié à un noeud relai d'un cluster, pour recevoir des données de surveillance de ce noeud relai et les traiter (étapes 500 à 515 de la figure 5a) ainsi que pour générer et transmettre des données de contrôle à ce noeud relai (étapes 520 à 535 de la figure b).

Le dispositif mettant en oeuvre les étapes 500 à 535 est, par exemple, le dispositif 340 décrit en référence à la figure 3.

Comme les étapes 400 à 410 et les étapes 415 à 425, les étapes 500 à 515 et les étapes 520 à 535 sont exécutées de façon distincte, typiquement en parallèle.

Comme illustré, pour traiter, typiquement analyser, des données permettant de surveiller et contrôler un cluster, à partir d'un ordinateur distant (i.e. non directement relié au cluster), une première étape a pour objet la réception des données transmises par le noeud relai (étape 500).

Ces données sont reçues par une interface réseau de l'ordinateur distant, cet interface réseau reliant ce dernier à un noeud relai via un réseau de communication (e.g. réseau de communication de type Ethernet).

Selon un mode de réalisation particulier, les données échangées entre le noeud relai et l'ordinateur distant sont transmises sous forme de trames, par exemple de trames Ethernet, comprenant un ou plusieurs paquets de données. Chaque trame comprend un identifiant de l'ordinateur distant, par exemple l'adresse IP de son interface réseau.

Dans une étape suivante (étape 505), les données reçues sont décapsulées aux fins de recouvrer les données d'origine (i.e. avant encapsulation) conformes au protocole de communication utilisé par le cluster, par exemple des paquets de données conformes au standard InfiniBand.

Les données recouvrées sont alors transmises à un module de surveillance et de contrôle de l'ordinateur distant (étape 510) qui les traite (étape 515).

Comme décrit précédemment, le module de surveillance et de contrôle est, selon un mode de réalisation particulier, un module de surveillance et de contrôle configuré pour être mis en oeuvre sur un noeud du cluster. En d'autres termes, le module de surveillance et de contrôle est configuré pour traiter des données conformes à un protocole utilisé par le réseau de communication du cluster.

Parallèlement, pour transmettre des données de contrôle d'un cluster entre le dispositif distant et un dispositif de ce cluster, une première étape a pour objet de générer les données de contrôle (étape 520).

Ces données sont typiquement générées dans le module de surveillance et de contrôle ayant préalablement traités des données reçues du cluster (ces dernières ayant typiquement été reçues en réponse à une requête antérieure).

Après avoir été reçues (étape 525), par exemple du module de surveillance et de contrôle, les données de contrôle sont encapsulées dans une ou plusieurs trames de données dont le format est défini par le protocole mis en oeuvre dans le réseau de communication reliant l'ordinateur distant au noeud relai (étape 530).

Il s'agit, par exemple, de trames Ethernet. Elles comprennent un identifiant du noeud relai auquel doivent être transmises les données, par exemple son adresse IP préalablement obtenue par l'ordinateur distant.

Les données encapsulées sont alors transmises par l'ordinateur distant, via une interface réseau, au noeud relai (étape 535). Ce dernier les transfère alors au réseau de communication du cluster comme décrit en référence à la figure 4b.

Il convient de noter que les algorithmes décrits en référence aux figures 4 et 5 peuvent, par exemple, être mis en oeuvre dans un dispositif similaire à celui décrit en référence à la figure 2, sous forme d'un programme d'ordinateur.

Naturellement, pour satisfaire des besoins spécifiques, une personne compétente dans le domaine de l'invention pourra appliquer des modifications dans la description précédente.

## Revendications

1. Procédé de surveillance et de contrôle déportés d'un cluster comprenant une pluralité de noeuds (315, 335) connectés à un réseau de communication de type InfiniBand (305), un noeud (315) de ladite pluralité de noeuds, appelé noeud relai, comprenant une première interface réseau (210-1) conforme audit réseau de communication de type InfiniBand et une seconde interface réseau (320-2) conforme à un réseau de communication de type Ethernet, ledit noeud relai étant relié à un ordinateur distant (340) par un réseau de communication de type Ethernet (310), le procédé comprenant les étapes suivantes :
- réception (400), par le noeud relai, d'au moins un paquet de données de surveillance via ladite première interface réseau ;
- encapsulation (405), par le noeud relai, dudit au moins un paquet de données de surveillance reçu dans au moins une trame de données de surveillance conforme à un protocole dudit réseau de communication de type Ethernet;
- transmission (410), par le noeud relai, de ladite au moins une trame de données de surveillance audit ordinateur distant via ladite seconde interface réseau,
dans lequel l'ordinateur distant met en oeuvre un module de surveillance et de contrôle (355) et un module relai (350) configuré pour transmettre des données reçues du noeud relai (315) au module de surveillance et de contrôle (355), de sorte que le module relai (350) est configuré pour « leurrer » le module de surveillance et de contrôle (355) qui agit comme s'il était mis en oeuvre dans un dispositif directement relié au réseau de communication de type InfiniBand.

2. Procédé selon la revendication 1 comprenant en outre les étapes suivantes,
- réception (415), par le noeud relai, via ladite seconde interface réseau, dudit ordinateur distant, d'au moins une trame de données de contrôle comprenant au moins un paquet de données de contrôle ;
- décapsulation (420), par le noeud relai, de ladite au moins une trame de données de contrôle reçue pour recouvrer ledit au moins un paquet de données de contrôle contenu dans ladite au moins une trame de données de contrôle reçue ; et
- transmission (425), par le noeud relai, via ladite première interface réseau, dudit au moins un paquet de données de contrôle recouvré.

3. Procédé selon la revendication 1 ou la revendication 2 comprenant en outre les étapes suivantes,
- réception (500), par l'ordinateur distant, dudit noeud relai, d'au moins une trame de données comprenant au moins un paquet de données ;
- décapsulation (505), par l'ordinateur distant, de ladite au moins une trame de données reçue dudit noeud relai pour recouvrer ledit au moins un paquet de données contenu dans ladite trame de données reçue dudit noeud relai ; et
- traitement (515), par l'ordinateur distant, dudit au moins un paquet de données recouvré contenu dans ladite trame de données reçue dudit noeud relai, ladite étape de traitement dudit au moins un paquet de données recouvré étant mise en oeuvre dans le module de surveillance et de contrôle, ledit module de surveillance et de contrôle étant configuré pour traiter des données conformes à un protocole utilisé par le réseau de communication de type InfiniBand.

4. Procédé selon l'une quelconque des revendications 1 à 3 comprenant en outre les étapes suivantes, mises en oeuvre dans ledit ordinateur distant,
- réception (525), d'un module de surveillance et de contrôle configuré pour être mis en oeuvre dans un noeud dudit cluster, d'au moins un paquet de données ;
- encapsulation (530) dudit au moins un paquet de données reçu dudit module de surveillance et de contrôle configuré pour être mis en oeuvre dans un noeud dudit cluster, dans au moins une trame de données conforme à un protocole dudit réseau de communication dudit second type ;
- transmission (535), audit noeud relai, de ladite au moins une trame de données comprenant ledit au moins un paquet de données reçu dudit module de surveillance et de contrôle configuré pour traiter des données conformes à un protocole utilisé par le réseau de communication de type InfiniBand.

5. Procédé selon l'une quelconque des revendications 1 à 4 comprenant en outre une étape préalable de mémorisation, dans ledit noeud relai, d'une adresse dudit ordinateur distant, ladite adresse dudit ordinateur distant mémorisée étant utilisée pour encapsuler au moins un paquet de données à transmettre audit ordinateur distant sous forme d'au moins une trame de données.

6. Procédé selon l'une quelconque des revendications 1 à 5 comprenant en outre une étape de mémorisation, dans ledit ordinateur distant, d'une adresse dudit noeud relai, ladite adresse dudit noeud relai mémorisée étant utilisée pour encapsuler au moins un paquet de données à transmettre audit noeud relai sous forme d'au moins une trame de données.

7. Procédé selon l'une quelconque des revendications 1 à 6 selon lequel au moins un paquet de données transmis dudit noeud relai audit ordinateur distant est un paquet de données de type MAD comprenant des informations relatives audit cluster.

8. Programme d'ordinateur comprenant des instructions adaptées à la mise en oeuvre de chacune des étapes du procédé selon l'une quelconque des revendications précédentes lorsque ledit programme est exécuté sur un ordinateur.

9. Système comprenant au moins un noeud relai et au moins un ordinateur distant comprenant des moyens configurés pour mettre en oeuvre chacune des étapes du procédé selon l'une quelconque des revendications 1 à 7.

## Patentansprüche

1. Verfahren zur abgesetzten Überwachung und Kontrolle eines Clusters, der mehrere Knoten (315, 335) umfasst, die an ein Kommunikationsnetz des Typs InfiniBand (305) angeschlossen sind, wobei ein Knoten (315) der mehreren Knoten, Vermittlerknoten genannt, eine erste Netzschnittstelle (210-1), die dem Kommunikationsnetz des Typs InfiniBand entspricht, und eine zweite Netzschnittstelle (320-2) umfasst, die einem Kommunikationsnetz des Typs Ethernet entspricht, wobei der Vermittlerknoten über ein Kommunikationsnetz des Typs Ethernet (310) an einen Remotecomputer (340) angeschlossen ist, wobei das Verfahren die folgenden Schritte umfasst:
- Empfangen (400), mittels des Vermittlerknotens, mindestens eines Überwachungsdatenpakets über die erste Netzschnittstelle;
- Einkapseln (405), mittels des Vermittlerknotens, des mindestens einen empfangenen Überwachungsdatenpakets in einen Überwachungsdatenrahmen, der einem Protokoll des Kommunikationsnetzes des Typs Ethernet entspricht;
- Übertragen (410), mittels des Vermittlerknotens, des mindestens einen Überwachungsdatenrahmens an den Remotecomputer über die zweite Netzschnittstelle,
wobei der Remotecomputer ein Überwachungs- und Kontrollmodul (355) und ein Vermittlermodul (350) einsetzt, das dazu konfiguriert ist, vom Vermittlerknoten (315) her empfangene Daten so an das Überwachungs- und Kontrollmodul (355) zu übertragen, dass das Vermittlermodul (350) dazu konfiguriert wird, das Überwachungs- und Kontrollmodul (355) zu "täuschen", das so wirkt, als wäre es in einer direkt an das Kommunikationsnetz des Typs InfiniBand angeschlossenen Vorrichtung eingesetzt.

2. Verfahren nach Anspruch 1, darüber hinaus die folgenden Schritte umfassend:
- Empfangen (415), mittels des Vermittlerknotens, über die zweite Netzschnittstelle, vom Remotecomputer mindestens eines Kontrolldatenrahmens, der mindestens ein Kontrolldatenpaket umfasst;
- Entkapseln (420), mittels des Vermittlerknotens, des mindestens einen empfangenen Kontrolldatenrahmens, um das mindestens eine Kontrolldatenpaket, das in dem mindestens einen empfangen Kontrolldatenrahmen enthalten ist, wiederherzustellen; und
- Übertragen (425), mittels des Vermittlerknotens, über die erste Netzschnittstelle, des mindestens einen wiederhergestellten Kontrolldatenpakets.

3. Verfahren nach Anspruch 1 oder Anspruch 2, darüber hinaus die folgenden Schritte umfassend:
- Empfangen (500), mittels des Remotecomputers, vom Vermittlerknoten, mindestens eines Datenrahmens, der mindestens ein Datenpaket umfasst;
- Entkapseln (505), mittels des Remotecomputers, des mindestens einen vom Vermittlerknoten her empfangenen Datenrahmens, um das mindestens eine Datenpaket wiederherzustellen, das in dem vom Vermittlerknoten her empfangenen Datenrahmen enthalten ist; und
- Verarbeiten (515), mittels des Remotecomputers, des mindestens einen wiederhergestellten Datenpakets, das in dem vom Vermittlerknoten her empfangenen Datenrahmen enthalten ist, wobei der Verarbeitungsschritt des mindestens einen wiederhergestellten Datenpakets in dem Überwachungs- und Kontrollmodul umgesetzt wird, wobei das Überwachungs- und Kontrollmodul dazu konfiguriert ist, Daten zu verarbeiten, die einem Protokoll entsprechen, das durch das Kommunikationsnetz des Typs InfiniBand verwendet wird.

4. Verfahren nach einem der Ansprüche 1 bis 3, darüber hinaus die folgenden Schritte umfassend, die im Remotecomputer umgesetzt werden:
- Empfangen (525) mindestens eines Datenpakets, von einem Überwachungs- und Kontrollmodul her, das dazu konfiguriert ist, in einem Knoten des Clusters eingesetzt zu werden;
- Einkapseln (530) des vom Überwachungs- und Kontrollmodul her empfangenen mindestens einen Datenpakets in mindestens einem Datenrahmen, der einem Protokoll des Kommunikationsnetzes des zweiten Typs entspricht, wobei das Überwachungs- und Kontrollmodul dazu konfiguriert ist, in einem Knoten des Clusters eingesetzt zu werden;
- Übertragen (535), an den Vermittlerknoten, des mindestens einen Datenrahmens, der das mindestens eine Datenpaket umfasst, das vom Überwachungs- und Kontrollmodul her empfangen wurde, um die Daten zu verarbeiten, die einem Protokoll entsprechen, das durch das Kommunikationsnetz des Typs InfiniBand verwendet wird.

5. Verfahren nach einem der Ansprüche 1 bis 4, darüber hinaus einen vorläufigen Schritt zum Speichern, im Vermittlerknoten, einer Adresse des Remotecomputers umfassend, wobei die gespeicherte Adresse des Remotecomputers dazu verwendet wird, mindestens ein Datenpaket einzukapseln, das an den Remotecomputer in Form mindestens eines Datenrahmens übertragen werden soll.

6. Verfahren nach einem der Ansprüche 1 bis 5, darüber hinaus einen Schritt zum Speichern, im Remotecomputer, einer Adresse des Vermittlerknotens umfassend, wobei die gespeicherte Adresse des Vermittlerknotens dazu verwendet wird, mindestens ein Datenpaket einzukapseln, das an den Vermittlerknoten in Form eines Datenrahmens übertragen werden soll.

7. Verfahren nach einem der Ansprüche 1 bis 6, wobei mindestens ein Datenpaket, das vom Vermittlerknoten an den Remotecomputer übertragen wird, ein Datenpaket des Typs MAD ist, das Informationen bezüglich des Clusters umfasst.

8. Computerprogramm, das Instruktionen umfasst, die zur Umsetzung jedes der Schritte des Verfahrens nach einem der vorhergehenden Ansprüche angepasst ist, wenn das Programm auf einem Computer ausgeführt wird.

9. System, das mindestens einen Vermittlerknoten und mindestens einen Remotecomputer umfasst, der Einrichtungen umfasst, die dazu konfiguriert sind, jeden der Schritte des Verfahrens nach einem der Ansprüche 1 bis 7 umzusetzen.

## Claims

1. A method of remote monitoring and remote control of a cluster comprising a plurality of nodes (315, 335) connected to a communication network of InfiniBand type (305), a node (315) of said plurality of nodes, called relay node, comprising a first network interface (210-1) in accordance with said communication network of InfiniBand type and a second network interface (320-2) in accordance with a communication network of Ethernet type, said relay node being connected to a remote computer (340) by a communication network of Ethernet type (310), the method comprising the following steps:
- receiving (400), by the relay node, at least one packet of monitoring data via said first network interface;
- encapsulating (405), by said relay node, said at least one received packet of monitoring data in at least one frame of monitoring data in accordance with a protocol of said communication network of Ethernet type;
- sending (410), by the relay node, said at least one frame of monitoring data to said remote computer via said second network interface,
wherein the remote computer implements a monitoring and control module (355) and a relay module (350) configured to send data received from the relay node (315) to the monitoring and control module (355), such that the relay module (350) is configured to "deceive" the monitoring and control module 355, which acts as if it was implemented in a device directly linked to the communication network of InfiniBand type.

2. A method according to claim 1, further comprising the following steps,
- receiving (415), by the relay node, via said second network interface, from said remote computer, at least one frame of control data comprising at least one packet of control data;
- decapsulating (420), by the relay node, said at least one received frame of control data to recover said at least one packet of control data contained in said at least one received frame of control data; and
- sending (425), by the relay node, via said first network interface, said at least one recovered packet of control data.

3. A method according to claim 1 or claim 2, further comprising the following steps,
- receiving (500), by the remote computer, from said relay node, at least one data frame comprising at least one data packet;
- decapsulating (505), by the remote computer, said at least one data frame received from said relay node to recover said at least one data packet contained in said at least one data frame received from said relay node; and
- processing (515), by the remote computer, said at least one recovered data packet contained in said data frame received from said relay node, said step of processing said at least one recovered data packet being implemented in the monitoring and control module, said monitoring and control module being configured to process data in accordance with a protocol used by the communication network of InfiniBand type.

4. A method according to any one of claims 1 to 3 further comprising the following steps, implemented in said remote computer,
- receiving (525), from a monitoring and control module configured to be implemented in a node of said cluster, at least one data packet;
- encapsulating (530) said at least one data packet received from said monitoring and control module configured to be implemented in a node of said cluster, in at least one data frame in accordance with a protocol of said communication network of said second type;
- sending (535), to said relay node, said at least one data frame comprising said at least one data packet received from said monitoring and control module configured to process data in accordance with a protocol used by the communication network of InfiniBand type.

5. A method according to any one of claims 1 to 4 further comprising a prior step of storing, in said relay node, an address of said remote computer, said stored address of said remote computer being used to encapsulate at least one data packet to send to said remote computer in the form of at least one data frame.

6. A method according to any one of claims 1 to 5 further comprising a step of storing, in said remote computer, an address of said relay node, said stored address of said relay node being used to encapsulate at least one data packet to send to said relay node in the form of at least one data frame.

7. A method according to any one of claims 1 to 6 wherein at least one data packet sent from said relay node to said remote computer is a data packet of MAD type comprising information relative to said cluster.

8. A computer program comprising instructions adapted for the carrying out of each of the steps of the method according to any one of the preceding claims when said program is executed on a computer.

9. A system comprising at least one relay node and at least one remote computer comprising means configured for carrying out each of the steps of the method according to any one of claims 1 to 7.
